# EUROPEAN PATENT APPLICATION

(11) **EP 1 182 901 A2**
(43) Date of publication of application: **27.02.2002**
(21) Application number: 01305619.7
(22) Date of filing: 28.06.2001
(51) Int. Cl.: H04Q 7/38

(54) **Mobile telephone and associated method for non-RF mode operation**

(30) Priority: 21.08.2000 US 642902
(71) Applicant: NOKIA MOBILE PHONES LTD., 02150 Espoo (FI)
(72) Inventor: Kantola, Janne, 37560 Lempäälä (FI); Savilampi, Erkki, 33900 Tampere (FI); Anttila, Mika U., 02420 Jorvas (FI)
(74) Representative: Read, Matthew Charles

(57) **Abstract**

A mobile telephone having communication and non-communication functionality includes a selectable non-RF operation mode to allow access and use of the non-communication functions in RF restricted areas. An indicating signal is provided to verify and validate that the mobile telephone is in the non-RF operation mode. A Digital Signal Processor (DSP) stores a set of instructions for selectively controlling the operation of the mobile telephone in an RF operating mode and a non-RF operating mode.

## Description

### Field of the Invention

The present invention relates generally to the field of telecommunications and mobile telephones, and deals more particularly with the operation of mobile telephones in different operating modes or profiles, specifically non-RF operating modes.

### Background of the Invention

Modern mobile telephones also known as cellular telephones, mobile phones, mobile stations or terminals provide communications via RF transmission and reception and often offer non-communications capabilities. These capabilities include features and functions such as those found in personal digital assistants (PDA's) and other portable, handheld devices, e.g., games, calendar, address book, calculator, notepad, voice recorder, music players and the like and other non-communication phone functions and applications. The utility and usefulness of these non-communication capabilities makes their access and use by a user very desirable whenever and wherever a user has a need to use such features and functions. Unfortunately, there are many places and environmental surroundings that require the user to shut the mobile station off due to restricted usage of RF signaling. Such restricted areas may be, for example, hospitals, airplanes, manufacturing plants, locations where explosives are used, and the like. Also, there are many locations and areas where a mobile station is not operational and cannot function as a normal mobile telephone due to lack of service coverage, but it is desired to access and use PDA-like functions or other features, functions and applications of the mobile station.

One disadvantage of currently known mobile phones is that the mobile phone must be powered to operate the PDA-like functions or other phone functions and applications, thus rendering them inaccessible and not usable in environments where the mobile phone must be shut off to prevent any possibility of an RF signal being generated and/or transmitted. One example of such a phone function and application would be to prepare a SMS (Short Message Service) message, also known as a text message, and place it in the outbox for delayed sending, for example, when the mobile phone is in an unrestricted area. This disadvantage is somewhat compensated for in some communicators such as for example, Nokia 9110 Communicator, which has a "flight profile mode" to prevent accidental turn-on of the phone. In the "flight profile active mode," previously downloaded mail may be read, e-mail, notes, short messages and calendar updates may be entered. The "flight profile mode" in these types of communicators prevents use of the mobile phone interface and access to phone functions while allowing the user to access functions other than phone functions using the PDA interface until the "flight profile mode" is returned to the inactive mode. An emergency call can be made with the "flight profile mode" active by dialing the emergency number after pressing an access key. Communicators such as the one described above generally have two separate and independent user interface access circuits, one for the PDA-like functions and another for the mobile phone communication functions and applications. The requirement for two separate user interfaces adds to the complexity and cost of the communicator by duplicating many of the portions of the user interface that are rendered inoperative when the phone function is shut off. In the case of the Nokia 9110, when the flight profile mode is active, the phone unit is switched off and the PDA-like functions are operational; except when the TEL button is pressed, a screen with a flying plane is displayed and one of the option buttons is labeled "Exit Flight Mode," indicating to a user that the flight profile mode must be deactivated in order to use the RF signaling capability of the phone. Since such a communicator, for example, the Nokia 9110 Communicator, has two (2) processors (a phone processor and a PDA-like function processor), it is easy to switch off the phone unit and continue using the PDA-like features portion. Therefore, it will be appreciated that a communicator, such as the Nokia 9110 Communicator, functions much differently operationally and structurally than a conventional cellular telephone or mobile station. The "flight profile mode" of the Nokia 9110 was designed specifically to convey to airline personnel that the phone unit is not on and cannot be accidentally switched on.

The term "mode," such as "flight profile mode," refers to a combination of one or more control parameters that allow the phone to operate in a predetermined manner. For example, the phone may have a default mode, office mode, meeting mode or any other number of modes, and within each mode may have a number of phone functions, such as call diverting, ringer volume, sound volume, call alert or any other number of phone functions. Each phone function in turn may also have a number of phone settings; for example, the call diverting function may divert all calls, only divert calls if the phone is not answered, divert calls when the phone is busy, divert data calls, and diversion under other defined conditions. Therefore, it will be seen and understood that when it is said a phone is in a given "mode," one or more control parameters are selected to cause the phone to operate in a predetermined manner in accordance with the selected "mode."

Accordingly, it is an object of the present invention to provide a selectable operation mode or profile in a mobile telephone to disable all radio signaling or transmission to allow the user to access the features, functions and applications of the mobile phone, including PDA-like features and functions, in RF use restricted areas and locations.

It is a further object of the present invention to provide a non-RF operation mode in a mobile telephone to decrease power consumption of the mobile telephone during operation of the PDA-like features and functions.

It is a yet further object of the present invention to provide a mobile telephone with a readily visible or audible indicating signal verifying and validating that the mobile telephone is in its non-RF operation mode.

It is a still further object of the present invention to provide a mobile telephone that permits a user to dial emergency numbers irrespective of the operation mode the mobile telephone.

It is an additional object of the present invention to provide a mobile telephone that can return to its normal operating mode irrespective of the mobile telephone's current operation mode.

### Summary of the Invention

In accordance with the present invention, a mobile telephone having communications and other phone features, functions and applications including personal digital assistant (PDA) -like functionality includes a selectable non-RF operation mode or profile. The mobile telephone includes means for sensing the status of the RF mode to determine whether the RF mode is enabled or disabled. An indicating signal is provided to verify and validate that the mobile telephone is in the non-RF operation mode.

In another aspect of the present invention, the mobile telephone stores in a memory a set of instructions corresponding to a predetermined operating mode or profile for subsequent retrieval to operate the mobile telephone in accordance with instructions retrieved from the instruction set memory.

In yet a further aspect of the present invention, the non-communication phone functions and PDA-like functions of the mobile telephone are accessible and useable without powering the RF power section of the mobile telephone.

### Brief Description of the Drawings

Other features and advantages of the present invention will become readily apparent from the following description and drawings wherein:
Fig. 1 is a flow chart showing the sequence of operations that occur when a user powers on a mobile telephone and selects the non-RF operation mode;
Fig. 2 is a flow chart showing the sequence of operations that occur when a user wants to make a call, send an SMS or fax, e-mail or access the internet;
Fig. 3 is a flow chart showing the sequence of operations that occur when the mobile telephone is powered on from a power off state and a user wants to select the non-RF operation mode to use PDA-like functions and inhibit RF operation after the mobile telephone is powered on;
Fig. 4 shows one embodiment of a phone with a visual indicating signal to indicate that the non-RF operation mode is active;
Fig. 5 shows another embodiment of a phone with the visual indicating signal shown on the mobile telephone display to indicate that the non-RF operation mode is active;
Fig. 6 shows an alternate embodiment of a phone with the visual indicating signal shown on the mobile telephone display to indicate that the non-RF operation mode is active; and
Fig. 7 shows a further alternate embodiment of a phone with a visual indicating signal shown on the mobile telephone display to indicate that the non-RF operation mode is active.

### Detailed Description of the Preferred Embodiments

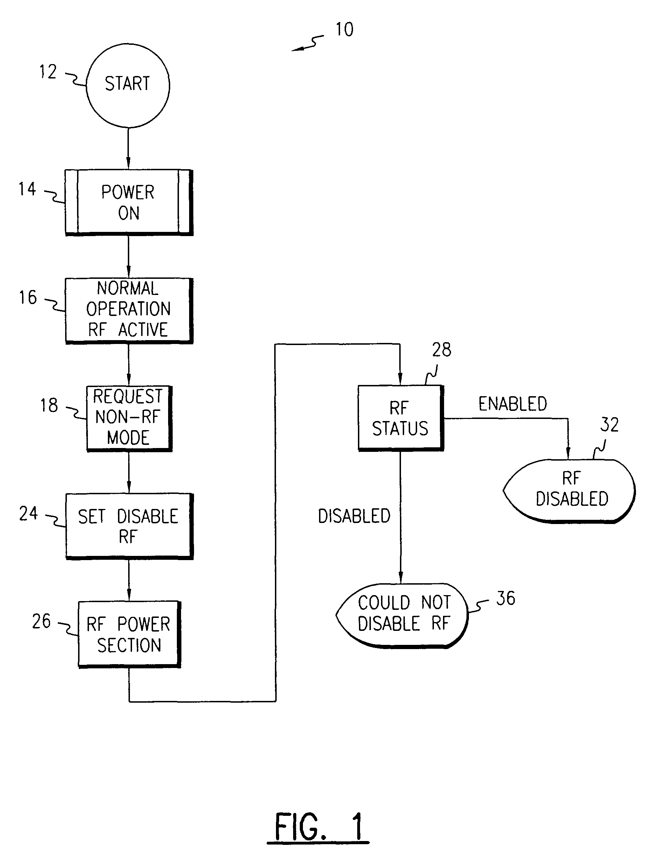

Turning now to the drawings and considering Fig. 1 in particular, a flow chart showing the sequence of operations that occur when a user powers on a mobile telephone embodying the present invention and selects the non-RF operation mode is illustrated therein and generally designated 10. The sequence of operations begins at the START function block 12. The mobile telephone is initially turned on as shown by the POWER ON function block 14. In this case the mobile telephone powers on with the RF section being active or enabled, as indicated by the NORMAL MODE function block 16. In the sequence of operations shown in Fig. 1, the user desires to change from the RF active mode to the non-RF operating mode of the mobile telephone and enters via the USER INTERFACE, typically by means of the keypad or menu function of the phone, a non-RF activate signal that the RF power section of the mobile telephone be shut down, as indicated by the REQUEST NON-RF MODE function block 18. The non-RF activate signal is processed by a set of instructions which may be stored in a memory means for subsequent retrieval and use by the program software. The program software generates and forwards the non-RF activate signal to a controller or digital signal processor (DSP) which responds to the non-RF activate request and generates a disable RF command signal as indicated by the SET DISABLE RF function block 24. The disable RF signal is forwarded from the DSP and input to the RF power section of the mobile telephone, generally designated by the RF POWER SECTION function block 26. The DSP sends and receives various control signals to and from the RF POWER SECTION 26 to sense and determine the status of the RF POWER SECTION 26. An RF condition signal as represented by the RF STATUS function block 28 corresponding to the status or state of the RF power section (i.e., whether the RF POWER SECTION is enabled or disabled) is generated by the DSP which also generates a response signal which contains information relative to the status of the RF POWER SECTION. The information signal containing the status of the RF POWER SECTION is processed by the program software. The program software generates an RF STATUS RESPONSE signal, which may be forwarded to the USER INTERFACE to cause an indicating signal which is readily observable and detectable by a user, such as, for example, in the form of a message display on the screen of the mobile telephone or an alerting tone or other such signals. An enabled RF STATUS condition signal 30 is displayed as a "COULD NOT DISABLE RF" message on the message display 32. A disabled RF STATUS condition signal 34 is displayed as a "RF DISABLED" message on the message display 36. It should be noted that the instruction set of the PROGRAM SOFTWARE may also be within the memory means of the DSP. The instruction set also provides the appropriate instructions to control the operation of the mobile telephone in the normal manner, together with any auxiliary or ancillary functions such as personal digital assistant (PDA) -like functions well understood by those in the art of providing such functions in such portable hand-held devices.

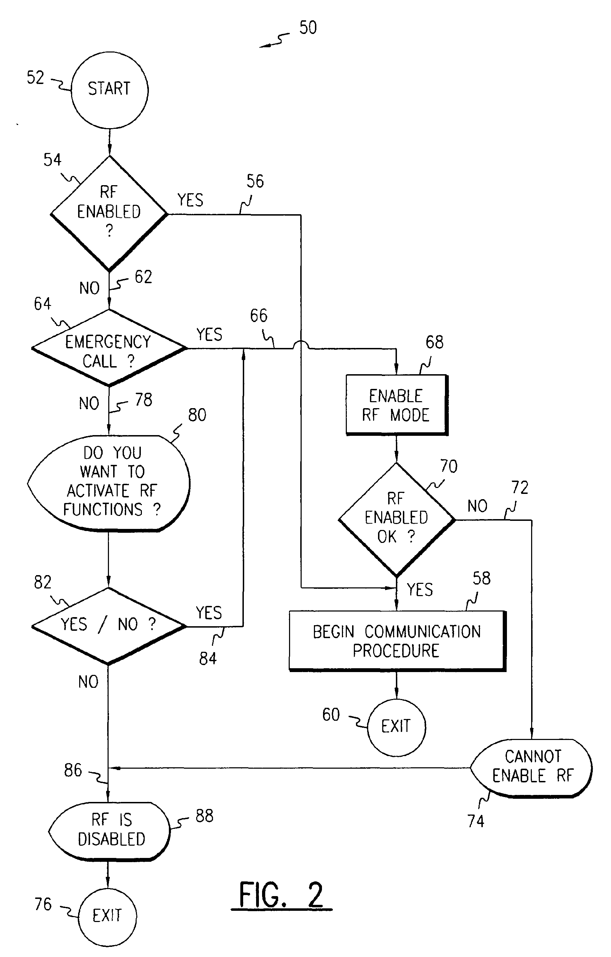

Turning now to Fig. 2, a flow chart showing the sequence of operations that occur when a user wants to make or send a text message also known as a short message service (SMS) message or facsimile, e-mail or engage in internet communications which utilize the RF portion of the mobile telephone. In Fig. 2, the flow chart sequence generally designated 50 starts at the START function block 52 with the mobile telephone being in an unknown or undetermined state; that is, it is not known whether the RF power section is enabled or disabled. In accordance with the instruction set, an inquiry indicated by the RF ENABLED? function block 54 determines whether the RF function of the mobile telephone is enabled or disabled. If the RF function of the mobile telephone is enabled, the YES output 56 of the RF ENABLED? function block 54 is input to the "BEGIN COMMUNICATION PROCEDURE" function block 58, after which time the instruction set is exited as indicated by the EXIT function block 60. If it is determined in the RF ENABLED? function block 54 that the RF function is not enabled, a corresponding NO signal 62 is input to the EMERGENCY CALL? inquiry function block 64. If the user wishes to make an emergency call, such as a 911 call, or other similar emergency call number sequence, a YES signal 66 corresponding to the user's desire to make such an emergency call, is input to an ENABLE RF MODE function block 68. Upon receipt of such a signal 66, the mobile telephone attempts to power the RF power section of the mobile telephone. The RF power section is monitored by the RF ENABLED OK? function block 70 to determine the status of the request. If the RF power section is not properly enabled, a NO signal 72 indicating that the RF power section cannot be enabled is input to the CANNOT ENABLE RF function block 74. Such reasons for not being able to enable the RF power section include lack of coverage, dead battery, or other similar circumstances and conditions well known to those skilled in the art of RF mobile telephone communication. The "CANNOT ENABLE RF" status as indicated by the function block 74 is displayed as a "RF IS DISABLED" message shown in the function block 88 or is otherwise provided to the user and the instruction set is exited as indicated by the EXIT function block 76.

If the user does not want to make an emergency call, a NO signal 78 corresponding to that decision causes an inquiry message, "DO YOU WANT TO ACTIVATE RF FUNCTIONS?," as indicated by the DISPLAY function block 80, to be displayed on the graphics screen of the mobile telephone. If the user responds to the request in the DECISION function block 82, that the RF functions are to be enabled, a YES signal 84 corresponding to the desire to activate the RF functions is input to the ENABLE RF MODE function block 68 and the sequence follows as above. If the user does not want to activate the RF functions in the decision block 82, a NO signal 86 corresponding to the decision not to activate the RF functions is displayed as a message "RF IS DISABLED" as shown in the function block 88. The message is displayed on the screen of the mobile telephone and the instruction set is exited as indicated by the EXIT function block 76.

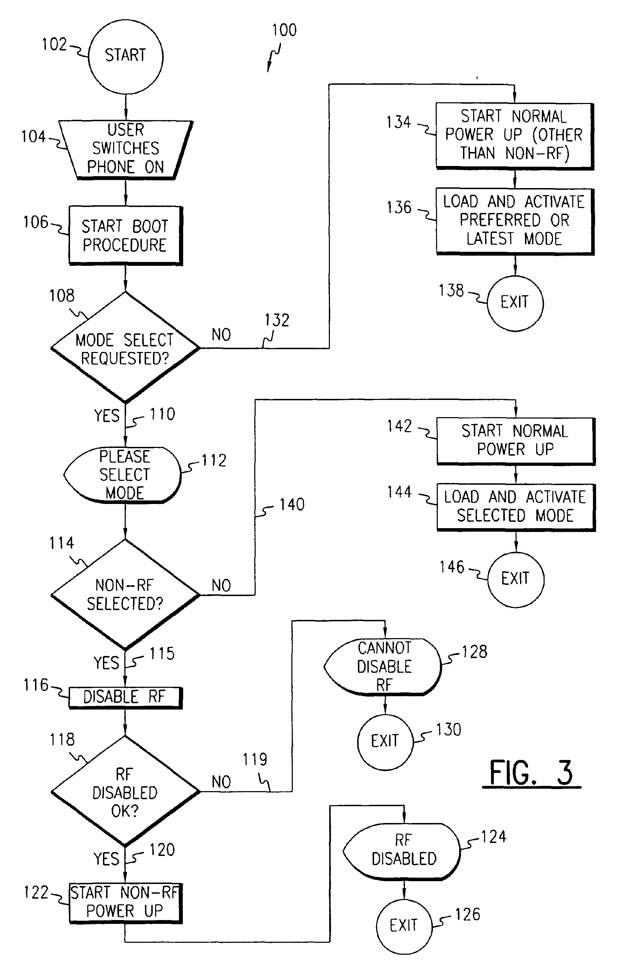

Turning now to Fig. 3, a flow chart generally designated 100 is illustrated therein and shows the sequence of operations that occur when the mobile telephone is powered on from an initially powered-off state and a user wants to activate non-communication phone functions and features such as the PDA-like functions, voice recording through the microphone, playing music, as for example MP3, through a speaker or headphones, and inhibit the activation of the RF power section of the mobile telephone. As shown in Fig. 3, the mobile telephone is in an initially powered-off state and a user wants to turn the phone on which may be in an unknown state or mode to play a game or to use other PDA-like or non-communication phone functions without activating the RF transmitting/receiving functions of the phone. The instruction set sequence begins at the START function block 102, and the user turns the mobile telephone on by pushing the on/off key as represented by the USER SWITCHES PHONE ON function block 104. In response to the detection of a signal from the on/off key, the mobile telephone activates its startup as indicated by the START BOOT PROCEDURE function block 106 and initializes itself in accordance with the instruction set contained in the program software. At the completion of the boot procedure, the instruction set functions to determine if the "mode key" has been operated after the mobile telephone is turned on as indicated in the MODE SELECT REQUESTED? decision block 108. If the "mode key" is pressed immediately after pressing the on/off key or by pressing the on/off key and the mode key when switching the phone on, or any other combination of keys or dedicated actions such as, for example, the opening of the hinged keypad cover on such an equipped phone can be used to initiate the action. If the "mode key" is operated, a YES signal 110 causes the instruction set to generate a PLEASE SELECT MODE message 112 on the screen of the mobile telephone. In response to the PLEASE SELECT MODE message 112, the instruction set inquires to determine if the non-RF mode is selected as indicated by the NON-RF SELECTED? function block 114. If the non-RF operation mode is selected, a YES signal 115 is generated to attempt to disable the RF power section as indicated by the DISABLE RF function block 116. The process to disable the RF power function is controlled by the DSP as explained in conjunction with Fig. 1. The sequence now detects whether the RF power function has been disabled properly as indicated by the RF DISABLED OK? function block 118, and if verified that the RF power function is disabled, a YES signal 120 is generated to cause the instruction set to power up the mobile telephone with non-RF power settings as indicated by the START NON-RF POWER UP function block 122. Upon completion of powering up in the non-RF operation mode, a signal is generated to display the status of the RF mode on the screen of the mobile telephone as shown in the RF DISABLED display function block 124. The instruction set is exited as indicated by the EXIT function block 126 and the mobile telephone is enabled to use the non-communication phone functions and features, for example, the PDA-like functions, such as the calendar, games, calculator, without worry that the RF power section of the mobile telephone can become active.

If a response to the RF status check as shown in the RF DISABLED OK? decision block 118 is determined that the RF function is not properly disabled, a NO signal 119 is generated and a message is shown in the CANNOT DISABLE RF display block 128 indicating to the user that the RF function cannot be disabled. The instruction set exits as indicated by the EXIT function block 130, and both the PDA-like functions and communications functions of the mobile telephone are inhibited from use.

If it is determined in the MODE SELECT REQUESTED? decision box 108 that the "mode key" has not been operated after the mobile telephone has been powered on, a NO signal 132 causes the instruction set to start the normal power-up (other than non-RF operation mode) sequence as represented by the START NORMAL POWER UP (OTHER THAN NON-RF) function block 134. At the completion of the power-up sequence, a preferred or latest operation mode is loaded and activated as shown by the LOAD AND ACTIVATE PREFERRED OR LATEST MODE function block 136, and which activation is either selected by the user or as part of the default sequence. Upon loading and activation of the desired mode, the instruction set is exited as indicated by the EXIT function block 138 leaving the mobile telephone enabled for RF communications functions and/or PDA-like functions as desired by the user.

If the determination is made in the NON-RF SELECTED? decision block 114 that the non-RF mode has not been selected, a NO signal 140 is output to the instruction set to initiate the normal power-up sequence as represented by the START NORMAL POWER UP function block 142. At the completion of the normal power-up sequence, the user loads and activates the selected mode, other than the non-RF mode, as represented by the LOAD AND ACTIVATE SELECTED MODE function block 144. The load and activate selected mode is selected by the user or through a default sequence controlled by the instruction set. At the completion of the loading and activation of the selected mode, the instruction set exits as indicated by the EXIT function block 146 allowing both the PDA-like functions and the RF communication functions to be used in accordance with the provisions of the mode selected.

It will be recognized that the flow chart of Fig. 3 illustrates one representative embodiment of a sequence of operations that occur when the phone is turned on from an initially powered-off state, and that further alternate embodiments of sequences of operations are possible without departing from the spirit and scope of the invention. For example, a set of instructions of the program software can automatically request a user to select a desired mode of operation whenever the ON/OFF key is pressed to turn on the phone so that the phone powers up the selected mode. Alternately, the phone may have been turned off while the non-RF mode was active so that a subsequent turn-on of the phone would cause the phone to automatically boot-up loading the non-RF mode or the last mode the phone was in when it was turned off with the non-RF mode active.

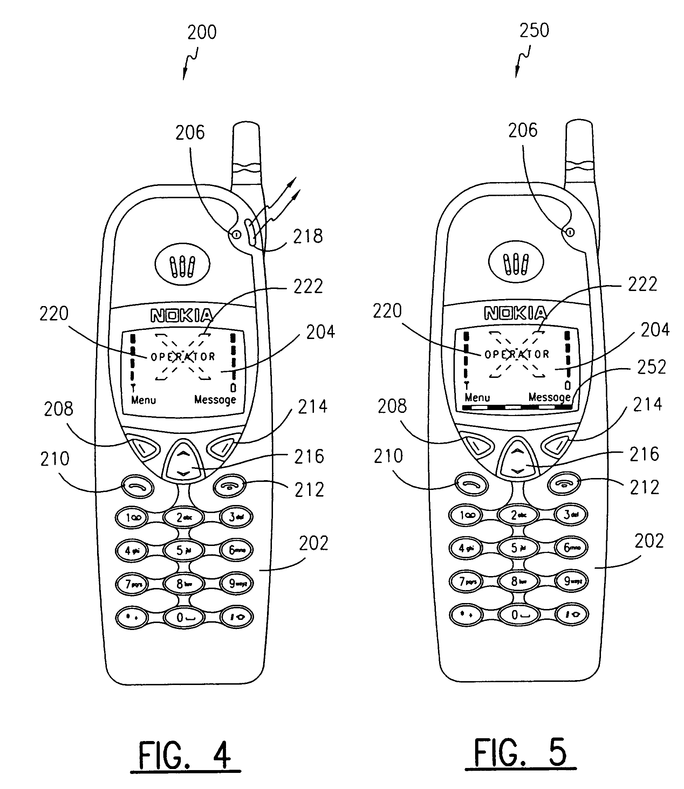

Turning now to Fig. 4, an embodiment of a mobile telephone with a visual indicating signal for verifying and validating that the non-RF operation mode is active is illustrated therein and indicated generally by the reference numeral 200. The mobile telephone 200 is typical of such devices and includes a user-interface or keypad 202 and a screen designated generally 204 for showing graphic or alphanumeric messages and displays. The mobile telephone 200 further carries a power on/off button 206, a menu select button 208, send button 210, end call or exit function button 212, name select function button 214, and scroll function button 216 whose functions and operations are well known to those skilled in the art of mobile telephones. The mobile telephone 200 is presented by way of example and not limitation as there are many different types and arrangements of such mobile phones.

In Fig. 4, the visual indicating signal can be represented as a steady or flashing light emitting diode (LED) preferably red in color indicated generally 218. The LED 218 is dedicated solely to the indicating function. Alternately, or in addition, the screen 204 may display a text message such as illustrated by the word "operator" 220 with the universal symbol of an "X" 222 crossing through the word "operator" indicating that the phone cannot be used in the RF mode. The word "operator" with the symbol "X" superimposed on the word together with the LED 218 form one possible combination to alert appropriate personnel that the phone is locked out of its RF mode but is usable as a PDA device. Preferably, the visual indicating signal for verifying and validating that the non-RF operation mode is active is associated with the power on/off button 206. The signal may be a steady illumination of the power on/off button 206 when the mobile telephone is in the non-RF operating mode only. Alternately, the power on/off button 206 may flash to indicate the non-RF operation mode. A further alternate visual indicating signal for verifying and validating that the non-RF operation mode is active is to illuminate the send key 210 or to flash the send key at a predetermined flashing rate. The flashing color is preferably red and is dedicated to the non-RF operation mode function.

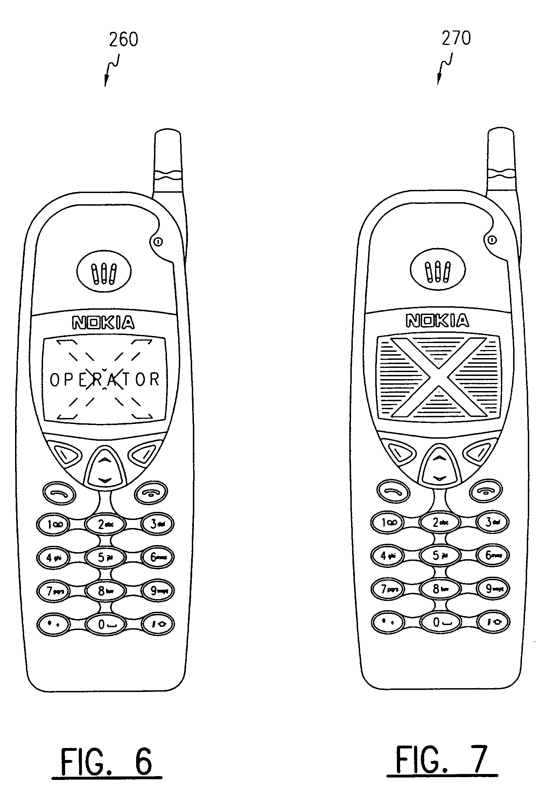

Turning now to Fig. 5, a mobile telephone 250 is similar in appearance and function as the mobile telephone 200 illustrated in Fig. 4, with like parts corresponding to like reference numerals. In the alternate embodiment of a phone with a visual indicating signal verifying and validating that the non-RF operation mode is active, an indicator 252 such as a flashing or sequencing bar light is shown on the display 204 to indicate that the non-RF operation mode is active. Additionally, the word "operator" 220 may be displayed on the screen with the universal symbol "X" superimposed thereon to indicate that the phone is not in condition for RF operation. Alternate combinations of visual and aural indicating signals, such as displaying a note and/or producing an alerting sound when the user presses the ON/OFF key 206, can be utilized to verify and validate that the non-RF operation mode is active. The term "operator" as used in the description of Figs. 4 and 5 is described for illustrative purposes only, as it is well known in the industry to create or order new "operator" logos, text, graphics and the like to replace or customize the "operator's" name or message on the screen of the phone. Because of the widespread availability and ease to alter a phone's graphics, ring tones and operation, a user could potentially duplicate or imitate a logo or icon used to indicate the non-RF mode is active to "fool" anyone looking at the screen to verify the non-RF operation mode status. Therefore, it is preferable to make the display of the term "operator" with the symbol "X" superimposed thereon as large as possible to virtually cover the screen, as illustrated by the phone 260 in Fig. 6. Alternatively, it may be preferable to make the screen "black" and have the symbol "X" superimposed thereon appear in white covering virtually the entire display area of the screen, as illustrated by the phone 270 in Fig. 7.

A method and apparatus for operating a mobile telephone in a non-RF operation mode has been described above in several preferred embodiments; however, numerous modifications such as the type of mobile telephone that is used, indicating signal, and phone activation, for example, may be incorporated as is known to those skilled in the art of mobile telephones and therefore the invention has been described by way of illustration rather than limitation.

## Claims

1. Method for operating a mobile telephone comprising the steps of:
sensing the RF operating mode of the mobile telephone;
generating a response signal corresponding to said RF operating mode status; and
providing an indicating signal corresponding to the RF operating mode status.

2. Method for operating a mobile telephone as defined in claim 1, wherein the mobile telephone includes non-communication phone function capability further including the step of operating said mobile telephone in a non-RF operating mode to access said non-communication phone function capability.

3. Method for operating a mobile telephone as defined in claim 1, wherein the step of providing said indicating signal further includes providing said indicating signal in response to the RF operating mode being disabled.

4. Method for operating a mobile telephone as defined in claim 1, further including the step of disabling the RF operating mode in response to a request for non-RF operation input by a user.

5. Method for operating a mobile telephone as defined in claim 1, wherein the step of providing an indicating signal corresponding to the RF operating mode status further includes illuminating an LED to indicate the non-RF operating mode.

6. Method for operating a mobile telephone as defined in claim 1, wherein the step of providing an indicating signal corresponding to the RF operating mode status further includes illuminating the power on/off key to indicate the non-RF operating mode.

7. Method for operating a mobile telephone as defined in claim 1, wherein the step of providing an indicating signal corresponding to the RF operating mode status further includes displaying a predetermined indicia on the screen of the mobile telephone to indicate the non-RF operating mode.

8. Method for operating a mobile telephone as defined in claim 1, wherein the step of displaying said predetermined indicia further includes displaying the word "operator" with the letter "X" superimposed thereon to indicate the non-RF operating mode.

9. Method for operating a mobile telephone having communication function and non-communication function capability comprising the steps of:
providing a set of instructions for selectively controlling the operation of the mobile telephone in an RF operating mode and a non-RF operating mode;
selecting a desired one of said RF and non-RF operating modes;
retrieving an instruction from said set of instructions corresponding to said selected one of said RF and non-RF operating modes; and
operating the mobile telephone in response to the instruction retrieved from said set of instructions.

10. Method for operating a mobile telephone as defined in claim 9, further including the step of deactivating the RF operating mode in response to an "activate non-RF operating mode" instruction retrieved from said instruction set.

11. Method for operating a mobile telephone as defined in claim 10, further including the step of overriding an "activate non-RF operating mode" instruction to activate the RF operating mode in response to an emergency call request.

12. Method for operating a mobile telephone as defined in claim 9, further including the step of powering up the mobile telephone in a normal power-up sequence in the absence of a non-RF operating mode.

13. Method for operating a mobile telephone as defined in claim 12, further including the step of loading and activating a preferred operating mode or a default operating mode or last used operating mode.

14. A mobile telephone having communication function and non-communication function capability comprising:
means for storing a set of instructions for selectively controlling the operation of the mobile telephone in an RF operating mode and a non-RF operating mode;
means for selecting a desired one of said RF and non-RF operating modes whereby the non-communication functions are accessible and usable in both the RF and non-RF operating modes;
means for retrieving an instruction from said set of instructions corresponding to said selected one of said RF and non-RF operating modes;
means for operating the mobile telephone in response to the instruction retrieved from said set of instructions;
sensing means responsive to the RF operating mode; and
means responsive to said sensing means for providing an indicating signal to verify and validate the operation of the mobile telephone in the non-RF operating mode.

15. A mobile telephone as defined in claim 14, further comprising means for deactivating the RF operating mode in response to an "activate non-RF operating mode" instruction retrieved from said instruction set.

16. A mobile telephone as defined in claim 15, further comprising means for overriding an "activate non-RF operating mode" instruction to activate the RF operating mode in response to an emergency call request.

17. A mobile telephone as defined in claim 15, further comprising said non-communication functions including the playing of music.

18. A mobile telephone as defined in claim 15, further comprising said non-communication functions including the playing of games.

19. A mobile telephone as defined in claim 15, further comprising said non-communication functions including PDA-like functions.
